Europäisches Patentamt

European Patent Office

Office européen des brevets

(11) Publication number: **0 238 235**
**A2**

(12) **EUROPEAN PATENT APPLICATION**

(21) Application number: **87301920.2**

(22) Date of filing: **05.03.87**

(51) Int. Cl.⁴: **F16F 15/12 , F16F 15/16**

(30) Priority: **21.03.86 US 842566**

(43) Date of publication of application:
**23.09.87 Bulletin 87/39**

(84) Designated Contracting States:
**DE FR GB IT**

(71) Applicant: **EATON CORPORATION**
**Eaton Center**
**Cleveland Ohio 44114(US)**

(72) Inventor: **Bopp, Warren Gerald**
**26338 Hidden Valley Court**
**Farmington Hills Michigan 48018(US)**

(74) Representative: **Douglas, John Andrew**
**Eaton House Staines Road**
**Hounslow Middlesex TW4 5DX(GB)**

(54) Torsion damping mechanism.

(57) A mechanism (22) adapted to be disposed between two relatively rotatable drives (42,24) for damping torsionals in a vehicle driveline. The mechanism comprises a bearingless viscous damper (28) having relatively rotatably housing and clutch assemblies (34, 40) free to rotate relative and nonconcentric to each other. The damper is disposed in parallel with nested, spiral wound springs (30,32) which are respectively connected at the radially outer and inner end to the housing and clutch assemblies by attachments 50,52 which are also free to rotate relative and nonconcentric to each other.

EP 0 238 235 A2

FIG. 1.

# TORSIONAL DAMPING MECHANISM

## CROSS-REFERENCE TO RELATED APPLICATIONS

This application is related to European Patent Application 84308435.1 (USSN 564 537), European Patent Application 86106788.2 (USSN 615 017), European Patent Application 85304922.9 (USSN 631 363), European Patent Application 86308330.9 (USSN 793 802). These applications are assigned to the assignee of this application.

## Field of the Invention

This disclosure relates to driveline torsion damping mechanisms operable over the entire operational range of a driveline. More specifically, the invention relates to such a mechanism for vehicle drivelines.

## BACKGROUND OF THE INVENTION

It is well-known that the speed of an Otto or Diesel cycle engine output or crankshaft varies even during so-called steady-state operation of the engine, i.e., the shaft continuously accelerates and decelerates about the average speed of the shaft. The accelerations and decelerations are, of course for the most part, a result of power pulses from the engine cylinders. The pulses may be of uniform frequency and amplitude when cylinder charge density, air/fuel ratio, and ignition are uniform. However, such uniformity does not always occur, thereby producing pulses which vary substantially in frequency and amplitude. Whether uniform or not, the pulses, which are herein referred to as torsionals, are transmitted through vehicle drivelines and to passengers in vehicles. The torsionals, which are often referred to as vibrations, are detrimental to driveline components and derogate passenger-ride quality. Further, the torsionals often cause driveline and vehicle body components to vibrate and produce annoying noises. An example of driveline vibration noise, known as idle rattle, occurs when a manual transmission is in neutral with its input shaft clutched to an engine running at or near idle speed; under such a condition low amplitude engine torsionals accelerate/decelerate - (rattle) driven gears not under load. An example of body noise, known as body boom or low frequency body vibration, occurs when an engine is lugged during rather low engine rpm; under such a condition engine torsionals cause body components, such as sheet metal panels, to resonate. Still further, tip-in/tip-out torque pulses, produced by abrupt engine acceleration and/or deceleration, jerk the driveline and vehicle. Such torque pulses are also detrimental to the driveline and derogate passenger-ride quality. Herein, such torque pulses are generally referred to as torsionals. In view of the foregoing, vehicle torsional damping mechanisms, ideally, isolate and dampen torsionals which are detrimental to driveline components, which derogate passenger-ride quality, and which cause annoying driveline and vehicle body noises.

Since the inception of the automobile, many torsional damping mechanisms have been proposed and used to attenuate and dampen driveline torque changes and torsionals. For example, master clutches used in combination with manual shift mechanical transmissions have long employed torsional damping mechanisms having spring isolators and mechanical friction damper devices disposed in parallel with each other and respectively operative to attenuate and dampen driveline torque changes and torsionals when the amplitude of changing torque and torsionals exceeds the slip or breakaway torque of mechanical friction damper devices. With such damping devices, portions of amplitude changes less than the slip or breakaway torque are transmitted directly through the clutch without attenuation, i.e., without flexing of the spring isolators. Accordingly, such torsional damping mechanisms fail to provide attenuation and dampening of low amplitude torque changes and torsionals. Stated in somewhat different terms, such prior art torsional dampening mechanisms function as rigid links in drivelines when the amplitudes of torque changes and torsionals are less than the slip or breakaway torque of the mechanical friction damping devices.

The torsional damping devise disclosed herein is closely related to the torsional damping mechanism disclosed in previously mentioned copending U.S. Application Serial Number 631,363. The torsional damping mechanism therein employs a pair of nested, spiral wound, very long travel torsion isolating springs which improve attenuation and a viscous damper which allows attenuation of torque changes and torsionals independent of their amplitude. The viscous damper therein provides an infinite range of damping levels since the viscous clutching surfaces therein are responsive to velocity rather than the amplitude of torque changes and torsionals. Further, a lost motion is provided to one of the viscous clutching surfaces for preventing damping of relatively low amplitude torque changes and torsionals.

The very long travel springs and viscous dampers in the torsional damping mechanism of the above identified U.S. patent application have effectively reduced and in many cases eliminated many vehicle driveability problems such as low frequency body vibration known as body boom due to engine lugging; driveline clunk and jolt due to sudden throttle movement; vehicle jerking and/or bouncing due to very quick throttle tap or due to transmission down shifts during quick throttle back-out or due to overly quick clutch engagement or due to non-uniform torque from cylinder-to-cylinder; vibrations due to normal engine firing frequency; etc. However, such mechanisms have required great care and expense to ensure actuate concentricity of relatively rotatable members of the viscous coupling and spring attachments so as not to overload bearing assemblies in the viscous coupling and over stress the nested, spiral wound springs.

## SUMMARY OF THE INVENTION

An object of the present invention is to provide an improved torsional damping mechanism which reduces or eliminates many vehicle driveability problems.

Another object of the present invention is to provide such a mechanism which is less expensive to produce while also being more durable and less prone to premature failure.

According to a feature of the invention, the mechanism includes a viscous damper having annular housing and clutch assemblies adapted to be disposed for rotation about the axis of a shaft; the housing assembly includes first and second radially extending sidewall members adapted to be drivingly connected at a radially outer extent to a member mounted for rotation relative to the shaft, the sidewall members are free to rotate nonconcentric to the shaft, and the sidewall members have mutually facing sidewall surfaces defining an annular radially extending chamber open at its radially inner extent and closed at its radially outer extent by means sealingly securing the sidewall members together; the clutch assembly includes radially outer and inner portions, the outer portion has oppositely facing radially extending sidewall surfaces disposed in axially spaced relation from the sidewall surfaces for viscous clutching coaction therewith via a viscous liquid in the chamber in response to relative rotation therebetween, and the inner portion being disposed radially inward of the chamber and adapted to be drivingly connected to the shaft; and at least one dynamic face seal for sealing the radially inner extent of the chamber and allowing nonconcentric rotation between the assemblies, the seal being disposed between the outer and inner portions of the clutch assembly and having an axially facing surface in sliding sealing contact with an axially facing surface of at least one of the assemblies; the improvement characterized by: the damper being adapted to be disposed in a vehicle driveline wherein the member mounted for rotation relative to the shaft is an input drive driven by a vehicle prime mover and wherein the shaft is an output drive for driving the vehicle; and resilient means connected in parallel with the damper and adapted to be serially connected between the input and output drives, the resilient means including radially outer and inner attachments respectively adapted for driving connection with the input and output drives for flexibility transmitting driveline torque and attenuating driveline torsionals between the drives independent of minor concentricity differences between the attachments.

According to another feature of the invention, in the previous feature, the resilient means comprises at least two nested, spiral wound springs disposed in parallel with the bearingless viscous damper.

## BRIEF DESCRIPTION OF THE DRAWINGS

The torsional damping mechanism of the present invention is shown in the accompanying drawing in which:

Figure 1 is a schematic view of a motor vehicle driveline;

Figure 2 is a sectional view of the torsional damping mechanism looking in the direction of arrows 2-2 of Figure 6;

Figure 3 is a reduced sectional view of the torsional damping mechanism looking along line 3-3 of Figure 2;

Figures 4 and 5 are partial relief views of a spring attachment looking in the directions of arrows 4 and 5 in Figure 2; and

Figure 6 is a relief view looking in the direction of arrow 6 in Figure 2 with the view being reduced less than that of Figure 3.

## DETAILED DESCRIPTION OF THE DRAWINGS

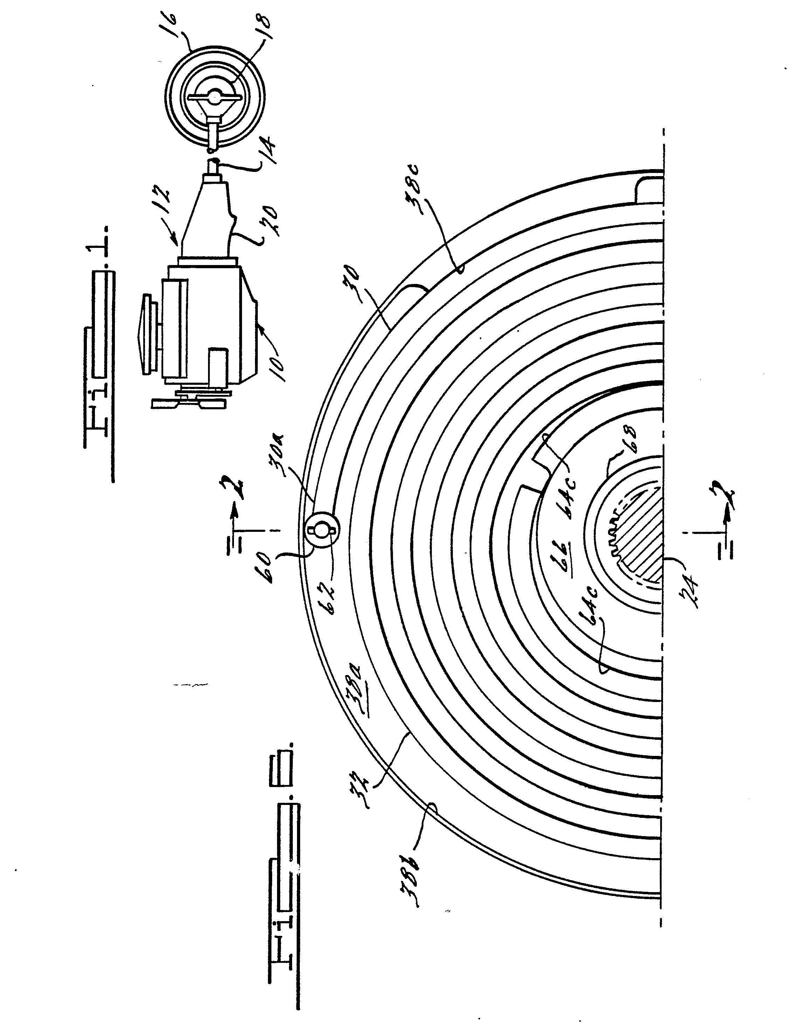

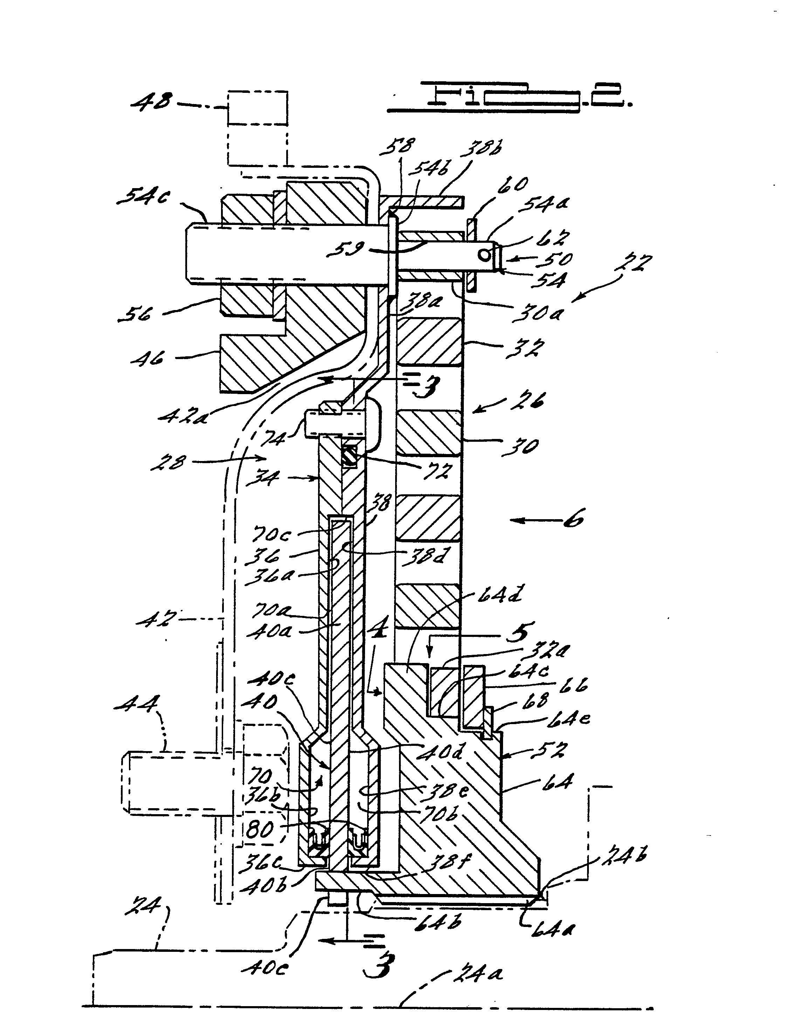

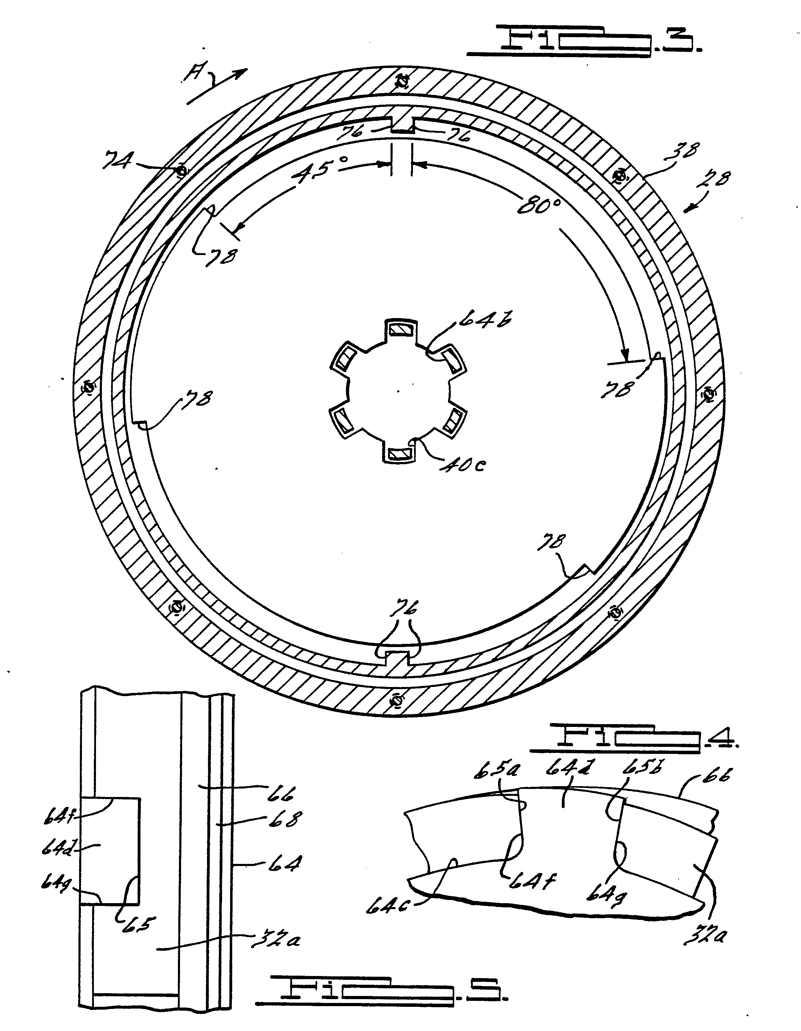

The motor vehicle driveline seen schematically in Figure 1 includes an internal combustion engine type prime mover 10 and a transmission 12 having an output shaft 14 drivingly connected to a load such as a ground engaging wheel 16 via a differential gear assembly 18 for a rear and/or front axle. Transmission 12 includes a housing 20 containing, at its interface with the rear of engine 10, a torsional damping mechanism 22 illustrated in Figures 2-5 and an unshown ratio section driven by a transmission input shaft 24 partially shown in phantom lines in Figure 2. Shaft 24 is mounted by unshown means for rotation about its axis 24a. Transmission 12 may be any of several well known types. For example, the transmission may be of the manual or automatic shift type and these may be of the step ratio or infinitely variable ratio type. Preferably, transmission 12 is of the general type disclosed in European Patent Application 0,029,711, entitled "Rotary Power Transmission" and published June 3, 1981.

Looking now specifically at torsional damping mechanism 22 in Figures 2-5, the mechanism includes a spring assembly 26 and a viscous coupling assembly 28. Spring assembly 26 includes at least two flat, nested, spiral wound, torsion springs 30,32. Coupling assembly 28 includes an annular housing assembly 34 defined by radially extending sidewall members 36,38 and an annular clutch assembly 40. The spring and coupling assemblies are disposed in parallel with each other and are adapted to be drivingly disposed in series in the vehicle driveline between an input drive 42 and an output drive, which output drive is defined by transmission input shaft 24. Input drive 42 may be a sheet metal stamping and is secured to an unshown engine crankshaft via a plurality of bolts 44. An annular trough 42a, defined by drive 42, provides a recess containing a flywheel mass 46. A ring gear 48 for an unshown engine starter may be secured to the radially outer extent of drive 42.

Spring assembly 26 includes the spiral springs 30,32 and radially outer and inner attachment assemblies 50, 52 adapted to connect springs 30,32 to input and output drives 42,24. Spring assembly 26 flexibly transmits driveline torque and attenuates driveline torsionals between relatively rotatable input and output drives 42,24. Radially outer attachment assembly 50 includes two axially extending fasteners 54 spaced 180 rotational degrees apart for providing positive drive connections of the input or radially outer ends of spiral springs 30,32 with input drive 42 and housing assembly 34 of viscous coupling or damper 28. Since mechanism 22 is shown in half section, only one of fasteners 54 and one input end 30a of the springs is shown. Fastener 54 of attachment 50 includes a pin portion 54a, a flange portion 54b secured to a flange portion 38a of housing sidewall member 38, and a threaded portion 54c receiving a nut 56 for securely sandwiching flywheel 46, drive 42, and flange portion 38a together. Flange portion 54b may be secured to flange portion 38a by welding as illustrated at 58. An axially extending bore 59 in spring end 30a receives pin portion 54a for pivotally mounting the spring end. A thrust washer 60 and a pin 62 limits axial movement of the spring end. Flange portion 38a of sidewall member 38 further includes, at its radially outer extent, an axially extending flange portion 38b providing the sidewall with added rigidity and providing a pair of diametrically opposed stop surfaces 38c for limiting radially outward movement of the sprial springs due to reverse torque, i.e., when the direction of driveline torque is from output drive 24 to input drive 42. Stops 38c have radially inwardly facing scroll shaped surfaces which mate with the scroll shaped surfaces of the sprial wound springs, thereby providing a rather large surface which reduces transverse stress in the springs.

Inner attachment assembly 52 includes an annular hub member 64 having a set of internal splines 64a adapted to mate with external splines 24b on output drive 24 for effecting positive drive therebetweeen, a set of axially extending and circumferentially spaced projections or teeth 64b, and an outer periphery for securing springs 30,32 to the hub member. The outer periphery of hub member 64 includes two radially outwardly facing scroll surfaces 64c, a lug 64d extending radially outward from each surface 64c, and an annular step 64e. Scroll surfaces 64c are analogous to stops 38c and provide stops or seats which mate with the scroll shaped surfaces of the spiral wound springs. Surfaces 64c thereby reduce transverse stress in the springs as they decrease in overall diameter due to forward torque transmission. Lugs 64d have circumferentially spaced, radially outwardly diverging sides 64f, 64g which mate with radially diverging sides 65a, 65b defined by a recess 65 formed in the output or radially inward ends of the springs. Figures 2, 4, and 5 illustrate a lug 64d mating with the recess 65 in output end 32a of spring 32. This lug-recess arrangement is rather inexpensive and is ideal for mass production processes. The diverging sides of the lugs and recesses prevent inadvertent disengagement of the springs during reverse torque. Axial movement of the output ends of the springs is prevented by a thrust washer 66 held in place by a snap ring 68.

Annular housing assembly 34 of viscous damper 28 includes the first and second radially extending sidewall members 36, 38 having internal faces formed to define an annular radially extending chamber 70 having a radially outward portion with mutually facing, axially spaced sidewall surfaces 36a, 38d defining a working area 70a and a radially inward portion with mutually facing, axially further spaced sidewall surfaces 36b, 38e defining a reservoir area 70b. Chamber 70 is open at its radially inner extent which is defined by annular, axially extending flange portions 36c, 38f of the sidewalls. Chamber 70 is closed at its radially outer extent 70c by an o-ring seal 72 and a plurality of circumferentially spaced fasteners 74.

Clutch assembly 40 includes radially outer and inner portions 40a, 40b. Outer portion 40a has common, oppositely facing, radially extending surfaces 40c,40d dipsosed within the chamber. Within the working area 70a, surfaces 40c,40d define clutching surfaces in close axially spaced relation with sidewall surfaces 36a, 38c for viscous clutching coaction therewith via a viscous liquid in the chamber. Inner portion 40b includes a plurality of internal spline teeth 40e mating with teeth 64b of hub member 64. The radial flanks of teeth 40e,64b may be provided with a predetermined circumferential spacing therebetween to form a lost motion means allowing minor to-and-fro relative angular rotation between hub member 64 and housing assembly 34 without corresponding to-and-fro relative angular rotation between the housing and clutch assemblies and, therefore, without viscous clutching or damping. The amount of this lost motion may vary from driveline to driveline. For many applications, lost motions of 5 to 8 degress seem to be acceptable. The precise amount of lost motion depends, for the most part, on driveline application, stiffness or rate of springs 30,32, number of engine cylinders, the amount of free play in an assembly for preventing gear rattle when such an assembly is provided, etc. Viscous damper 28 includes pairs of stops 76,78 respectively projecting radially inward from the radially outer extent of chamber 70 and radially outward from the radially outer extent of clutch assembly 40. Stops 76,78 limit maximum relative rotation between the housing and clutch assemblies and thereby limit maximum flexing of springs 30,32 to prevent over stressing. By way of example only, the stops are spaced and positioned to allow 80 degrees of relative rotation in the forward direction of torque, as indicated by arrow A in Figure 3, and 45° relative rotation in the reverse direction. Preferably, the circumferential surfaces of chamber 70 and clutch assembly 40, including stops 76,78 when such stops are used internal of the damper, are radially spaced far enough from each other to prevent contact due to nonconcentricity.

Chamber 70 is closed at its radially inner extend by annular, dynamic face seals 80 maintained in position by the outer cylindrical surfaces of flange portions 36c, 38f. The faces of seals are biased into sealing contact with sidewall surfaces 36b,38e and clutching surfaces 40c, 40d by annular springs having a U-shaped crossection. Alternatively, rather solid ring seals may be used to provide a more rigid centering of clutch assembly 40 in chamber 70. Such solid seals may be resiliently biased into contact with surface 40c, 40d by manufacturing sidewall members 36,38 with a predetermined spring rate. Seals 80 may be obtained from the Mechanical Seal Division of the Fluorocarbon Company, P.O. Box 10871 Kyle Street, Los Alamitos, California. The seals also axially center clutch assembly 40 in chamber 70. The axial distance between surfaces 36a,40c and 38d,40d depends on the area of the surfaces, viscosity of the viscous liquid, and the amount of damping desired. Surfaces 36a,40c and/or 38d,40d may be provided with dished or recessed portions to vary damping or viscous clutching coaction as taught in copending U.S. Application Serial Number 631,363, which application is incorporated herein by reference.

Input drive 42 is fixed to rotate with the unshown engine crankshaft which is theoretically aligned axially for rotation about axis 24a of shaft 24. The radially outer portions of housing assembly 34, flywheel 46, and outer attachment assembly 50 are fixed to rotate concentric to axis 24a. Clutch assembly 40 and inner attachment assembly 64 are serially splined to output drive 24 for rotation, which is also theoretically, concentric to axis 24a. As a practical matter, such concentricity is difficult to obtain even with low volume mechanisms manufactured to very close tolerances. For mass produced, relatively inexpensive mechanisms, such as disclosed herein, concentricity and alignment of relatively rotatable components is even more difficult to obtain. Common practice is to use bearings which forceably position and align components. For example, it is common practice to employ radial and axial bearings to force concentric and axial alignment of housing and clutch assemblies 34,40. However, such bearing add cost, unwanted and unpredictable parasitic drag, and are difficult to fit within available space in many installations. Further, such bearings are subject to overstressing and premature failure when they are used to force concentricity and alignment of components which are otherwise nonconcentric or misaligned by even relatively small amounts. Accordingly, the beringless design herein, inexpensively and reliably, accommodate or provides for concentric and axial misalignment of all relatively rotatable components of mechanism 22.

While a preferred embodiment of the present invention has been illustrated and described in detail, it will be apparent that various changes and modifications may be made in the disclosed embodiment without departing from the scope and spirit of the invention. The appended claims are intended to cover the disclosed embodiment and all changes and modifications believed to be within the spirit of the invention.

# Claims

1. A mechanism (22) including a viscous damper (28) having annular housing (34) and clutch (40) assemblies adapted to be disposed for rotation about the axis of a shaft (24); the housing assembly (34) including first and second radially extending sidewall members (36, 38) adapted to be drivingly connected at a radially outer extent (38a) to a member (46) mounted for rotation relative to the shaft (24), the sidewall members (38, 36) being free to rotate nonconcentric of the shaft (24), and the sidewall members having mutually facing sidewall surfaces (36a,38d) defining an annular radially extending chamber (70) open at its radially inner extent (36c,38f) and closed at its radially outer extent (70c) by means (72, 74) sealingly securing the sidewall members together; the clutch assembly (40) including radially outer and inner portions (40a,40b), the outer portion (40a) having oppositely facing radially extending sidewall surfaces (40c, 40d) disposed in axially spaced relation from the sidewall surfaces (36a, 38d) for viscous clutching coaction therewith via a viscous liquid in the chamber, and the inner portion (40b) disposed radially inward of the chamber (70b) and adapted to be drivingly connected to the shaft (24); and at least one dynamic face seal (80) for sealing the radially inner extent of the chamber and allowing nonconcentric rotation between the assemblies (34, 40), the seal being disposed between the outer and inner portions (40a, 40b) of the clutch assembly - (40) and having an axially facing surface in sliding sealing contact with an axially facing surface of at least one of the assemblies (34, 40); the improvement characterized by:

the damper (28) being adapted to be disposed in a vehicle driveline with the member (46) mounted for rotation relative to the shaft (24) being an input drive driven by a vehicle prime mover (10) and with the shaft being an output drive for driving the vehicle; and

resilient means (26) connected in parallel with the damper (28) and adapted to be serially connected between the input and output drives (46, 24), said resilient means including input and output attachments (50, 52) respectively adapted for driving connection with said input and output drives (46, 24) for flexibly transmitting driveline torque and attenuating torsionals between the drives independent of concentricity differences between said attachments (50, 52).

2. The mechanism of Claim 1, characterized by said face seals (80) each including spring means axially biasing said axially facing surface into sliding sealing contact with said axially facing surfaces of said at least one of the assemblies.

3. The mechanism of Claim 1, characterized by stop means (76, 78) for limiting relative rotation between said housing and clutch assemblies (34, 40) and for limiting torque transmitted by the resilient means.

4. The mechanism of Claim 3, characterized by said stop means (76, 78) being disposed within the housing assembly chamber (70).

5. The mechanism of Claim 3, characterized by said stops (76, 78) being circumferentially spaced stops respectively fixed to and respectively projecting radially inward and outward of the radially outer extent (70c) of the housing asembly chamber (70) and the radially outer extent of the clutch assembly outer portion (40a).

6. The mechanism of Claim 1, characterized by said input and output attachments (50, 52) being radially outer and inner attachments respectively connected to the radially outer extent (38a) of the housing assembly (34) and the clutch assembly inner portion (40b).

7. The mechanism of Claim 6, characterized by lost motion means (40e, 64b) disposed between one of said attachments (52) and its associated damper assembly (40).

8. The mechanism of Claim 6, characterized by said radially outer attachment (50) being secured for fixed rotation with said housing assembly (34), said radially inner attachment (52) being adapted for fixed rotation with the output drive (24), and said radially inner attachment (64) and clutch assembly (40) inner portion (40b) including connecting means (64b, 40e, 24a, 64a) providing the driving connection of said clutch assembly inner portion (40b) with the output drive (24).

9. The mechansim of Claim 8, characterized by said connecting means including mating splines - (24a, 64a).

10. The mechanism of Claim 9, characterized by said mating splines (24a, 64a) having circumferential spaces therebetween for allowing several degrees of relative rotation between said attachments (50, 52) without corresponding relative rotation between said assemblies (34, 40).

11. The mechanism of Claim 6, characterized by said resilient means (26) including a spiral spring (30 or 32) having its radially outer end (30a) connected to said radially outer attachment (50) and its radially inner end (32a) connected to said radially inner attachment (52).

12. The mechanism of Claim 11, characterized by said radially inner attachment including a radially extending lug portion (64d) and said radially inner end (32a) of said spring including a radially extending recess (65) receiving said lug portion - (64d) for effecting the connection therebetween.

13. The mechanism of Claim 12, characterized by said radially outer end (30a) of said spring being connected to said radially outer attachment - (50) for pivotal movement in a plane substantially normal to said axis of said shaft (24).

14. The mechanism of Claim 10, characterized by said resilient means (30 or 32) including at least two nested spiral springs (30, 32) having their radially outer ends (30a) connected to said radially outer attachment (50) and their radially inner ends - (32a) connected to said radially inner attachment - (52).

15. The mechanism of Claim 14, characterized by said radially inner attachment (52) including at least two radially extending lug portions (64d) circumferentially spaced apart and said at least two springs (30, 32) each including a radially extending recess (65) receiving one of said lug portions for effecting the connection therebetween.

16. The mechanism of Claim 15, characterized by said radially outer ends (30a) of said springs being connected to said radially outer attachment - (50) for pivotal movement in a plane substantially normal to said axis of said shaft (24).

17. The mechanism of Claim 1, characterized by said first housing member (36) and said radially outwardly extending portion (38a) of said housing assembly being formed from a single member.

18. The mechanism of Claim 17, characterized by the radially outer extent (38a) of said single member being formed with an axially extending stiffening flange (38b).

19. The mechanism of Claim 18, characterized by said resilient means (26) including a spiral spring (30 or 32), said spring having its radially outer end (30a) connected to said radially outer attachment (50) and its radially inner end (32a) connected to said radially inner attachment (52), and said axially extending flange (38b) being disposed radially outward of the outer end (30a) of the spring (30 or 32) and providing a reaction abutment for said spiral.

Fig. 1.

Fig. 2.

FIG.2.

FIG.3.

A

74

76    76

45°

78

80°

38

28

64b

40c

78

78

78

76

FIG.4.

65a    64d    65b    66

64f

64c    64g    32a

66
68

64f

64d

64

64g

65

32a

FIG.5.